# EUROPÄISCHE PATENTSCHRIFT

(11) **EP 2 034 575 B1**
(45) Veröffentlichungstag und Bekanntmachung des Hinweises auf die Patenterteilung: **07.11.2018**
(21) Anmeldenummer: 08014757.2
(22) Anmeldetag: 20.08.2008
(51) Int. Cl.: H02G 3/04, H02G 3/12

(54) **GERÄTEHALTERUNG ZUR BEFESTIGUNG VON ELEKTROINSTALLATIONSGERÄTEN AN EINEM LEITUNGSFÜHRUNGSKANAL**
APPARATUS HOLDER FOR FASTENING ELECTROINSTALLATION DEVICES TO A CONDUCTIVE CHANNEL
SUPPORT DESTINÉ À LA FIXATION D'APPAREILS D'INSTALLATION ÉLECTRIQUE SUR UNE GOULOTTE

(30) Priorität: 04.09.2007 DE 202007012406 U
(43) Veröffentlichungstag der Anmeldung: 11.03.2009
(73) Patentinhaber: Tehalit GmbH, 67716 Heltersberg (DE)
(72) Erfinder: Schmitt, Erwin, 67659 Kaiserslautern (DE); Mattfeld, Christian, 66919 Schauerberg (DE)
(74) Vertreter: Nuss, Laurent

(56) Entgegenhaltungen:
- EP-A1- 1 164 676
- DE-U1-202005 003 068
- US-A1- 2005 183 874

## Beschreibung

Die vorliegende Erfindung betrifft eine Gerätehalterung zur Befestigung von Elektroinstallationsgeräten, insbesondere Lampen, Kameras oder Monitore, an einem Leitungsführungskanal gemäß dem Oberbegriff nach Anspruch 1. Ferner betrifft die vorliegende Erfindung einen Leitungsführungskanal, insbesondere einen Wandkanal oder eine Raumsäule, der eine solche Gerätehalterung umfasst.

In modernen Büroräumen werden für die zu versorgenden Arbeitsplätze schon seit längerem Energie- und Netzwerkanschlüsse direkt an den zuführenden Leitungsführungskanälen angebracht. Für Arbeitsplätze, die sich nicht in Wandnähe sondern im Raum selbst befinden, sind zur Bereitstellung von Energie und Daten u.a. Raum- oder Anschlusssäulen vorgesehen, an denen sich die Steckdosen oder Netzwerkanschlüsse für den jeweiligen Arbeitsplatz befinden. Solche Raumsäulen werden nicht zuletzt aus optischen Gründen üblicherweise von Kabeln und Leitungen versorgt, die zweckmäßig unter Boden oder in einer Zwischendecke verlegt sind. Neben den üblichen Energie-, Netzwerk-, und sonstigen Versorgungsanschlüssen, werden an Leitungsführungskanälen oder Raumsäulen auch Elektroinstallationsgeräte, wie Lampen, Überwachungskameras oder Monitore für den Büroraum und den individuellen Arbeitsplatz angebracht. Zur Befestigung solcher Elektroinstallationsgeräte sind Gerätehalterungen vorgesehen, die an den Leitungsführungskanal befestigbar sind.

Die US 2005/018,3874 A1 beschreibt eine Gerätehalterung für Steckdosen, die an einem Kabelkanal angebracht ist. Die Gerätehalterung besitzt Klemmfüße, die unter die Deckelhalteprofile des Kanalunterteils gepresst werden.

Die EP 1 164 676 A1 beschreibt eine Gerätehalterung, die ebenfalls in ein Kanalunterteil einsetzbar ist.

Die DE 20 2005 003 068 U1 beschreibt eine Gerätedose für Elektroinstallationsgeräte, wobei im Bereich jeder Geräteöffnung ein gesondertes Rahmenteil mit dem Deckelteil der Gerätedose verbunden ist.

Eine solche Gerätehalterung sollte mehrere Funktionen erfüllen können. Zum einen sollte sie für verschiedene Gerätetypen, wie z. B. Lampen, Monitore oder Kameras, verwendbar sein, ohne dass verschiedene Typen von Gerätehalterungen erforderlich sind. Ferner sollte eine solche Gerätehalterung leicht an den Leitungsführungskanal montierbar, in die gewünschte Position verschiebbar und schließlich fest mit dem Kanal fixierbar sein.

Vor diesem Hintergrund besteht die Aufgabe der vorliegenden Erfindung darin, eine verbesserte Gerätehalterung bereit zu stellen, die diese Hauptanforderungen erfüllt.

Diese Aufgabe wird gelöst durch eine Gerätehalterung mit den technischen Merkmalen gemäß Anspruch 1.

Die erfindungsgemäße Gerätehalterung besteht aus einem Oberteil, das auf ein entsprechendes Unterteil aufrastbar ist. Die Gerätehalterung kann direkt in einem Kanalunterteil positioniert und befestigt werden, ohne dass um den Kanal umgreifende externe Haltestrukturen notwendig sind, wie es bei bekannten Gerätehalterungen der Fall ist.

Zur Verrastung des Oberteils mit dem Unterteil befindet sich an dem Oberteil wenigstens eine stirnseitig ausgeprägte Aussparung, in die eine ebenfalls an der Stirnseite des Unterteils ausgebildete Befestigungszunge greift. Im montierten Zustand stützt sich das Unterteil über die Befestigungszunge gegen das Oberteil ab. Auf diese Weise wird das Oberteil mit dem Unterteil zusammen gehalten und frontseitig verrastet. Vorzugsweise ist die Befestigungszunge gegenüber der Oberseite des Unterteils nach hinten leicht abgewinkelt und besitzt am Ende einen im stumpfen Winkel nach vorne, d. h. in Gegenrichtung geneigten Schenkelabschnitt. Der Fachmann wird jedoch erkennen, dass auch andere Verrastungsstrukturen möglich sind, wie z. B. das Eingreifen eines Befestigungsriegels in eine Tasche oder Öffnung, oder eine Hakenstruktur.

Das Anbringen der erfindungsgemäßen Gerätehalterung an einen Leitungsführungskanal kann in einer beliebigen Montagefolge erfolgen. So kann zunächst das Unterteil und dann das Oberteil der erfindungsgemäßen Gerätehalterung in den Kanal eingesetzt werden oder umgekehrt.

Die erfindungsgemäße Gerätehalterung besitzt den Vorteil, dass ein durch das Eigengewicht bedingtes Herunterrutschen der Halterung beim Anbringen am Kanal verhindert wird. Gleichzeitig bietet sie jedoch dem Monteur die Möglichkeit, die Konstruktion im eingesetzten Zustand durch Verschieben in Längsrichtung des Kanals auf die gewünschte Montagehöhe zu bringen. Hierzu ist nur ein leichter Kraftaufwand erforderlich. Erfindungsgemäß besitzt das Oberteil hierzu zwei seitlich ausgeformte und leicht nach innen zur Kanalmitte abgewinkelte Schenkel mit einer abschließenden Stützleiste, die mit entsprechenden Halteprofilen des Kanalunterteils kooperiert. Der Schenkel mit der Stützleiste ist vorzugsweise in etwa L-förmig ausgestaltet. Die Halteprofile des Kanalunterteils besitzen ein mit den seitlichen Schenkeln der Gerätehalterung kooperierendes Gegenprofil, so dass über eine Klemmverbindung ein sicherer Sitz der Gerätehalterung auf dem Kanalunterteil gewährleistet ist.

Ein weiterer Vorteil der erfindungsgemäßen Gerätehalterung besteht darin, dass die im Kanal verlegten Kabel und Leitungen ungehindert unter der Gerätehalterung verlaufen können. Bei der erfindungsgemäßen Gerätehalterung sind keine Befestigungselemente notwendig, die im Kanalinneren angeordnet sind und so eine Leitungsführung behindern. Auch entfallen außen am Kanal oder der Raumsäule angebrachte Befestigungselemente, wie z. B. umgreifende Haltestrukturen. Durch die erfindungsgemäße Ausgestaltung der Gerätehalterung mit dem erwähnten verrastbaren Oberteil und Unterteil ist ferner eine Kaschierung des Kanals durch ein bündiges Abschließen mit der Kanaloberseite möglich.

Wie schon erwähnt, kann die erfindungsgemäße Gerätehalterung entlang des Kanals in die gewünschte Montagehöhe verschoben werden. Ist die Montagehöhe erreicht, bleibt die Gerätehalterung aufgrund der stärkeren Klemmkräfte am Kanal fixiert, ohne dabei zu verrutschen. Erst durch das Anbringen von Befestigungsmitteln, wie z.B. Schrauben, oder durch Einrasten des Gerätes erfolgt die endgültige Fixierung und Befestigung der Gerätehalterung mit dem Kanalunterteil.

In einer bevorzugten Ausführungsform erfolgt das Anbringen des Gerätes über eine Adapterplatte oder Montageplatte, die über entsprechende Befestigungsmittel oder Haltestrukturen zum Anbringen des Gerätes verfügt.

Die Erfindung wird im Folgenden anhand ihrer Zeichnungen näher erläutert. Es zeigen:
- Fig. 1: eine isometrische Darstellung der erfindungsgemäßen Gerätehalterung mit ihren Einzelteilen,
- Fig. 2: einen Leitungsführungskanal mit einer montierten erfindungsgemäßen Gerätehalterung.

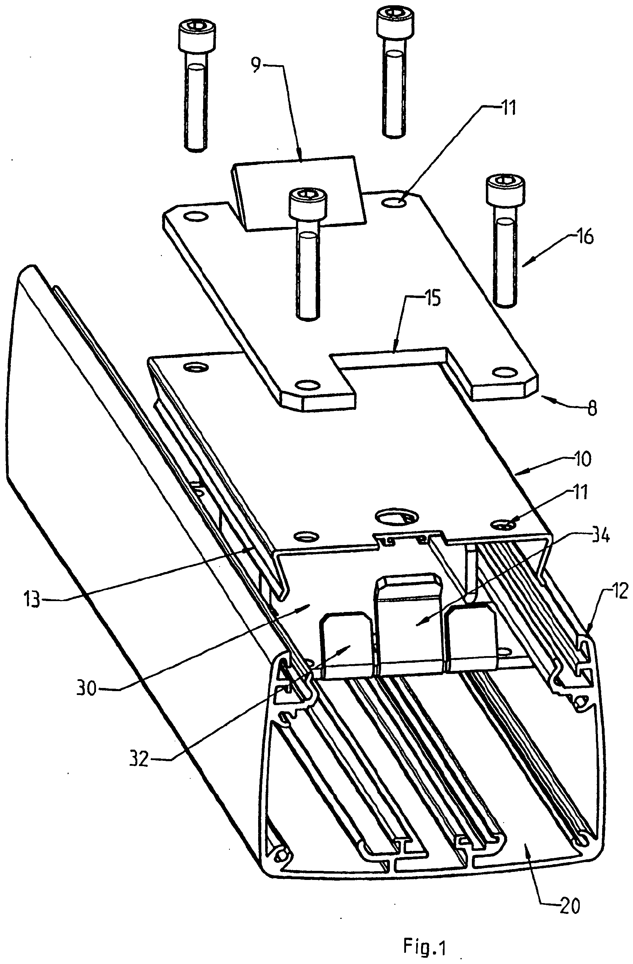

In Fig. 1 ist ein Leitungsführungskanal mit einem Kanalunterteil 20 gezeigt. Man erkennt das Oberteil 10, an dem sich stirnseitig in etwa der Mitte eine Aussparung 15 befindet. Ferner erkennt man das Unterteil 30, an dem stirnseitig eine Befestigungszunge 34 ausgebildet ist. Die Befestigungszunge 34 ist erkennbar gegenüber der Oberseite des Unterteils 30 leicht nach hinten abgewinkelt und weist an ihrem Fußende einen im stumpfen Winkel nach vorne in Gegenrichtung geneigten Schenkelabschnitt auf. Durch diese oder eine ähnliche Ausgestaltung der Befestigungszunge 34 ist eine Verrastung des Unterteils 30 mit dem Oberteil 10 möglich, und das Unterteil 30 wird gegen das Oberteil 10 abgestützt. Ferner wird ein Verrutschen des Oberteils 10 gegenüber dem Unterteil 30 verhindert.

In einer besonderen Ausgestaltung der Erfindung befinden sich an dem Unterteil 30 zwei neben der Befestigungszunge 34 stirnseitig ausgebildete und gegenüber dieser leicht nach vorne versetzte und nach oben abgewinkelte Endzungen 32. Diese dienen der weiteren Fixierung und Stabilisierung der Gerätehalterung.

Das Oberteil 10 besitzt an dessen Längsseite zwei seitliche nach unten und nach innen zur Kanalmitte abgewinkelte Schenkel 13 mit einer abschließenden Stützleiste. Schenkel 13 und Stützleiste bilden vorzugsweise eine L-Form. Über die Schenkel 13 des Oberteils 10 erfolgt eine Verrastung der Gerätehalterung mit den entsprechenden Halteprofilen 12 des Kanalunterteils 20. Man erkennt, wie die Schenkel 13 in die Halteprofile 12 des Kanalunterteils 20 greifen.

Die erfindungsgemäße Gerätehalterung ist für verschiedene Gerätetypen über entsprechende Adapterplatten verwendbar. In der gezeigten Ausführungsform ist eine Montageplatte 8 zu sehen, bei der zusätzlich ein nach oben abgewinkelter Riegel 9 ausgebildet ist, um daran eine Lampe zu befestigen.

Die erfindungsgemäße Gerätehalterung wird in ihrer endgültigen Montageposition über Befestigungsmittel 16 und dafür vorgesehenen Befestigungsöffnungen 11 an der Montageplatte 8 und dem Oberteil 10 und/oder Unterteil 30 am Kanalunterteil befestigt.

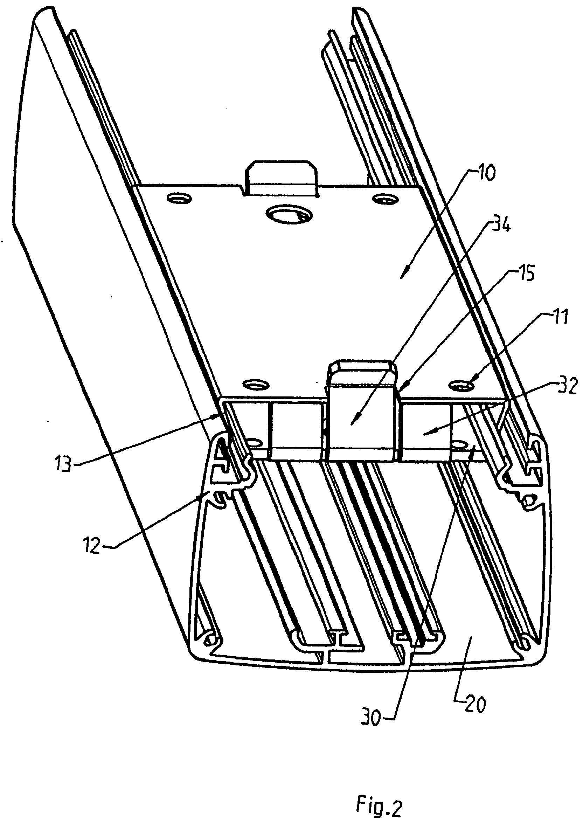

In Fig. 2 ist schließlich die zusammengesetzte Gerätehalterung im befestigten Zustand an einem Kanalunterteil 20 zu sehen. Man erkennt, wie die seitlichen Schenkel 13 des Oberteils 10 mit den Halteprofilen 12 des Kanalunterteils 20 kooperieren. Vorzugsweise sind die Schenkel 13, wie bereits erwähnt, an ihren Enden in etwa L-förmig ausgestaltet, die Halteprofile 12 des Kanalunterteils 20 besitzen ein entsprechendes Gegenprofil, so dass die Schenkelenden in das Halteprofil 12 greifen und sich dagegen abstützen. Auf diese Weise bleibt die Gerätehalterung unter Berücksichtigung ihres Eigengewichtes verrutschfest an ihrer Position, kann jedoch mühelos über zusätzlichen Kraftaufwand entlang des Kanalunterteils 20 in die gewünschte Montageposition verschoben werden (siehe Pfeil). Die endgültige Fixierung erfolgt, wie bereits beschrieben, über entsprechende Befestigungsmittel, wie z. B. Schrauben oder andere aus dem Stand der Technik bekannte Befestigungsstrukturen.

## Patentansprüche

1. Gerätehalterung zur Befestigung von Installationsgeräten, insbesondere Lampen, Kameras oder Monitore an einem Leitungsführungskanal, umfassend
- ein U-förmiges Oberteil (10) mit zwei seitlich nach unten geneigten Schenkeln (13), welche das Oberteil (10) über Halteprofile (12) gegen das Kanalunterteil (20) des Leitungsführungskanals abstützen, und
- ein Unterteil (30), das mit dem Oberteil (10) verrastbar ist,
**gekennzeichnet durch** die Merkmale:
- an dem Unterteil (30) befindet sich eine stirnseitig ausgebildete Befestigungszunge (34) die sich gegen das Oberteil (10) abstützt,
- das Unterteil (30) stützt sich von unten gegen die Halteprofile (12) des Kanalunterteils (20).

2. Gerätehalterung nach Anspruch 1, **dadurch gekennzeichnet, dass** sich an der Stirnseite des Oberteils (10) eine Aussparung (15) befindet, in welche die Befestigungszunge (34) des Unterteils (30) geführt wird.

3. Gerätehalterung nach Anspruch 1 oder 2, **dadurch gekennzeichnet, dass** das Oberteil (10) zusammen mit dem Unterteil (30) entlang des Kabelführungskanals (20) in Längsrichtung verschiebbar ist.

4. Gerätehalterung nach einem der vorhergehenden Ansprüche, **dadurch gekennzeichnet, dass** sich an der Stirnseite des Unterteils (30) zwei gegenüber der Befestigungszunge (34) nach vorne versetzte Endzungen (32) befinden.

5. Gerätehalterung nach einem der vorhergehenden Ansprüche, **dadurch gekennzeichnet, dass** auf dem Oberteil (10) zusätzlich eine Montageplatte (8) montiert ist.

6. Gerätehalterung nach Anspruch 5, **dadurch gekennzeichnet, dass** sich an der Montageplatte (8) Befestigungsstrukturen zur Aufnahme eines Elektrogerätes befinden.

7. Gerätehalterung nach einem der vorhergehenden Ansprüche, **dadurch gekennzeichnet, dass** sich an der Montageplatte (8) und/oder Oberteil (10) und/oder Unterteil (30) Befestigungsöffnungen (11) befinden, mit denen die Gerätehalterung durch Befestigungsmittel (16) an das Kanalunterteil (20) befestigbar ist.

8. Gerätehalterung nach einem der vorhergehenden Ansprüche, **dadurch gekennzeichnet, dass** sich die Aussparung (15) des Oberteils (10) und die Befestigungszunge (34) des Unterteils (30) beidseitig an den Stirnseiten befinden.

9. Leitungsführungskanal, umfassend eine Gerätehalterung nach einem der Ansprüche 1 bis 8.

10. Leitungsführungskanal nach Anspruch 9, **dadurch gekennzeichnet, dass** es sich bei dem Leitungsführungskanal um einen Wandkanal oder eine Raumsäule handelt.

## Claims

1. Device mount for fastening installation devices, in particular lamps, cameras or monitors, to a line guidance duct, comprising
- a U-shaped top part (10) with two limbs (13) which are inclined laterally downwards and which support the top part (10) against the duct bottom part (20) of the line guidance duct by means of holding profiles (12), and - a bottom part (30) which can be latched to the top part (10),
**characterized by** the features:
- a fastening tongue (34) which is formed at the end side and is supported against the top part (10) is located on the bottom part (30),
- the bottom part (30) is supported against the holding profiles (12) of the duct bottom part (20) from below.

2. Device mount according to Claim 1, **characterized in that** a cutout (15), into which the fastening tongue (34) of the bottom part (30) is guided, is located on the end side of the top part (10).

3. Device mount according to Claim 1 or 2, **characterized in that** the top part (10) can be displaced in the longitudinal direction along the cable guidance duct (20) together with the bottom part (30).

4. Device mount according to one of the preceding claims, **characterized in that** two end tongues (32), which are offset towards the front in relation to the fastening tongue (34), are located on the end side of the bottom part (30).

5. Device mount according to one of the preceding claims, **characterized in that** a mounting plate (8) is additionally mounted on the top part (10).

6. Device mount according to Claim 5, **characterized in that** fastening structures for receiving an electrical device are located on the mounting plate (8) .

7. Device mount according to one of the preceding claims, **characterized in that** fastening openings (11), by way of which the device mount can be fastened to the duct bottom part (20) by fastening means (16), are located on the mounting plate (8) and/or top part (10) and/or bottom part (30).

8. Device mount according to one of the preceding claims, **characterized in that** the cutout (15) of the top part (10) and the fastening tongue (34) of the bottom part (30) are located on either side of the end sides.

9. Line guidance duct, comprising a device mount according to one of Claims 1 to 8.

10. Line guidance duct according to Claim 9, **characterized in that** the line guidance duct is a wall duct or a room pillar.

## Revendications

1. Support d'appareil destiné à la fixation d'appareils d'installation électrique, en particulier de lampes, de caméras ou de moniteurs, à une goulotte de câblage, comprenant
- une partie supérieure (10) en forme de U avec deux branches latérales (13) inclinées vers le bas qui soutiennent la partie supérieure (10) contre la partie inférieure de goulotte (20) de la goulotte de câblage par l'intermédiaire de profilés de retenue (12), et
- une partie inférieure (30) qui peut être encliquetée avec la partie supérieure (10),
**caractérisé en ce que** :
- sur la partie inférieure (30) se trouve une languette de fixation (34) formée sur la face frontale, qui s'appuie contre la partie supérieure (10),
- la partie inférieure (30) s'appuie par le bas contre les profilés de retenue (12) de la partie inférieure de goulotte (20).

2. Support d'appareil selon la revendication 1, **caractérisé en ce que** la face frontale de la partie supérieure (10) présente un évidement (15) dans lequel la languette de fixation (34) de la partie inférieure (30) est guidée.

3. Support d'appareil selon la revendication 1 ou 2, **caractérisé en ce que** la partie supérieure (10) et la partie inférieure (30) peuvent être déplacées ensemble dans la direction longitudinale le long de la goulotte de câblage (20).

4. Support d'appareil selon l'une des revendications précédentes, **caractérisé en ce que** la face frontale de la partie inférieure (30) présente deux languettes d'extrémité (32) décalées vers l'avant par rapport à la languette de fixation (34).

5. Support d'appareil selon l'une des revendications précédentes, **caractérisé en ce qu'**une plaque de montage (8) est montée en plus sur la partie supérieure (10).

6. Support d'appareil selon la revendication 5, **caractérisé en ce que** la plaque de montage (8) présente des structures de fixation destinées à recevoir un appareil électrique.

7. Support d'appareil selon l'une des revendications précédentes, **caractérisé en ce que** la plaque de montage (8) et/ou la partie supérieure (10) et/ou la partie inférieure (30) présentent des ouvertures de fixation (11) avec lesquelles le support d'appareil peut être fixé à la partie inférieure de goulotte (20) par des moyens de fixation (16).

8. Support d'appareil selon l'une des revendications précédentes, **caractérisé en ce que** l'évidement (15) de la partie supérieure (10) et la languette de fixation (34) de la partie inférieure (30) sont situés des deux côtés sur les faces frontales.

9. Goulotte de câblage comprenant un support d'appareil selon l'une des revendications 1 à 8.

10. Goulotte de câblage selon la revendication 9, **caractérisée en ce que** la goulotte de câblage est une goulotte murale ou une colonne.
